# EUROPÄISCHE PATENTSCHRIFT

(11) **EP 0 175 318 B1**
(45) Veröffentlichungstag und Bekanntmachung des Hinweises auf die Patenterteilung: **24.11.1993**
(21) Anmeldenummer: 85111666.5
(22) Anmeldetag: 14.09.1985
(51) Int. Cl.: C08F 210/02

(54) **Verfahren zur Herstellung von Copolymerisaten des Ethylens mit (Meth)acrylsäurealkylestern**
Process for preparing copolymers of ethylene and (Meth)acrylic acid alkyl esters
Procédé de fabrication des copolymères de l'éthylène et d'esters alkyliques d'acide (méth)acrylique

(30) Priorität: 19.09.1984 DE 3434380
(43) Veröffentlichungstag der Anmeldung: 26.03.1986
(73) Patentinhaber: BASF Aktiengesellschaft, 67063 Ludwigshafen (DE)
(72) Erfinder: Ziegler, Walter, Dr., D-6803 Edingen-Neckathausen (DE); Brandstetter, Franz, Dr., D-6730 Neustadt (DE); Reimann, Horst, Dr., D-6520 Worms 1 (DE); Ball, Wolfgang, Dr., D-6800 Mannheim 1 (DE); Wittmer, Paul, Dr., D-6740 Landau (DE)

(56) Entgegenhaltungen:
- EP-A- 0 017 229
- EP-A- 0 017 230
- EP-A- 0 053 668
- EP-A- 0 106 999
- DE-A- 1 520 421

## Beschreibung

Die vorliegende Erfindung betrifft ein Verfahren zur Herstellung von Ethylencopolymerisaten durch Copolymerisation des Ethylens mit (a) 7,4 bis 14,8 Mol je 100 Mol Ethylen an Estern der (Meth)acrylsäure mit C₁-C₈-Alkoholen und (b) 0 bis 9,5 Mol je 100 Mol Ethylen an anderen mit Ethylen copolymerisierbaren Comonomeren in einem Rührautoklaven als Polymerisationssystem bei Drücken von 500 bis 5.000 bar und Temperaturen von 50 bis 450°C in Gegenwart von radikalisch zerfallenden Polymerisationsinitiatoren, indem man dem Polymerisationssystem in dessen Mitte und gegebenenfalls gleichzeitig an mindestens einer weiteren Zuführstelle oder an mehreren Stellen des Rührautoklaven ein Gemisch aus Ethylen, Initiator, Regler, Comonomer (a) und gegebenenfalls Comonomer (b) zuführt.

Weiterhin betrifft die vorliegende Erfindung Ethylencopolymerisate, erhältlich nach diesem Verfahren.

Copolymerisate des Ethylens, die Alkylester der (Meth)-acrylsäure einpolymerisiert enthalten, sind beispielsweise aus der GB-A-870480 bekannt. Diese Produkte enthalten 0,05 bis 1,5 Mol.% eines Alkylesters der Acrylsäure, und sind daher für viele Anwendungsbereiche bei tiefen Temperaturen nicht geeignet.

Ähnliches gilt für die Ethylencopolymerisate, wie sie in der GB-A-900 969 und in der US-A-2 953 551 beschrieben sind.

Des weiteren kennt man aus den Literaturstellen EP-A1-106 999 und US-A-3 147 870 Copolymerisate des Ethylens mit (Meth)acrylsäurealkylestern und gegebenenfalls weiteren mit Ethylen copolymerisierbaren Comonomeren. Diese Produkte besitzen zum Teil gute Tieftemperatureigenschaften, führen aber bei Anwendungen in Lösung, wie beispielsweise in Tetrachlorethylen zu Problemen, da sie nur unvollständig löslich sind.

Der Erfindung lag daher die Aufgabe zugrunde, ein Verfahren zur Herstellung von Ethylen-(Meth)acrylsäurealkylester-Copolymerisaten mit niedriger Glastemperatur, kleiner irreversibler Dehnung und guter Löslichkeit zu entwickeln.

Diese Aufgabe wurde erfindungsgemäß dadurch gelöst, daß man die maximale Temperaturdifferenz innerhalb des Polymerisationssystems auf nicht mehr als 30°C begrenzt.

Eine weitere Aufgabe der Erfindung waren Ethylencopolymerisate, erhältlich aus dem erfindungsgemäßen Verfahren.

Diese Aufgabe wurde durch das eingangs beschriebene Verfahren gelöst, wobei die Temperaturdifferenz innerhalb des Polymerisationssystems auf nicht mehr als 30°C, bevorzugt 0 bis 20°C, gehalten wird.

Als Ester der (Meth)acrylsäure kommen solche von Alkoholen mit C₁- bis C₈-Kohlenstoffatomen in Frage. Ganz besonders zeichnen sich die Ester der Acrylsäure mit n-Butanol oder Ethylhexanol aus. Es können aber auch Mischungen aus verschiedenen Estern der Acryl- oder Methacrylsäure verwendet werden.

Die Copolymerisate des Ethylens enthalten 7,4 bis 14,8 Mol, vorzugsweise 9,2 bis 13,8 Mol Ester der (Meth)acrylsäure auf 100 Mol Ethylen einpolymerisiert. Sie sind an sich aus der Literaturstelle EP-A1-106 999 bekannt.

Als weitere Comonomere kommen alle mit Ethylen copolymerisierbaren Comonomere, insbesondere solche, die monoethylenisch ungesättigt sind, in Frage. Geeignet sind z.B. Vinylcarbonsäureester, insbesondere Vinylester von C₁- bis C₆-Alkancarbonsäuren; monoethylenisch ungesättigter Dicarbonsäuren, insbesondere Mono- und Diester der Maleinsäure und Fumarsäure; monoethylenisch ungesättigte Carbonsäuren, insbesondere Acryl-, Methacryl-, Malein- und Fumarsäure; Amide monoethylenisch ungesättigter Carbonsäuren, insbesondere Acryl-, Methacrylsäureamid; sowie N-mono- und N,N-Dialkylamide der acryl- und Methacrylsäure, monoethylenisch ungesättigte Alkohole, monoethylenisch ungesättigte Ketone, Kohlenmonoxid, epoxidgruppenhaltige Monomere und cyclische Anhydride.

Enthalten die Copolymerisate des Ethylens neben den Estern der (Meth)acrylsäure noch andere Comonomere, so sind einpolymerisiert auf 100 Mol Ethylen, 7,4 bis 14,87 Mol, vorzugsweise 9,2 bis 13,8 Mol Ester der (Meth)acrylsäure und 0,01 bis 9,5 Mol, vorzugsweise 0,1 bis 4 Mol eines weiteren mit Ethylen copolymerisierbaren Monomeren.

Als weitere mit Ethylen copolymerisierbaren Monomeren kommen hier vor allem Acrylsäure und Methacrylsäure in Frage. Die erfindungsgemäßen Copolymerisate des Ethylens haben Schmelzindices von weniger als 100 g/10 min, vorzugsweise im Bereich von 6 bis 60 g/10 min, besonders aber im Bereich von 8 bis 20 g/10 min, gemessen nach DIN 53 735 bei 190°C und 2,16 kp.

Bei den Copolymerisaten liegt die Glastemperatur unterhalb -25°C. Die Bestimmung der Glastemperatur wurde dabei nach der DSC-Methode vorgenommen. Dazu wurden die Proben nach gründlicher Vakuumtrocknung zur Befreiung von Restmonomeren im Kalorimeter auf 120°C erwärmt, von 120°C mit 20°C pro Minute auf -120°C abgekühlt. An den auf diese Weise eine einheitliche thermische Vorgeschichte erteilten Proben wurden die Wärmeflußkurven mit einer Aufheizgeschwindigkeit von 20° ²C pro Minute aufgenommen. Zur Bestimmung der Glastemperatur wurde die DSC-Kurve der Schmelze ( > ca. 100°C) linear zu tieferer Temperatur extrapoliert. Es wird angenommen, daß der Schnittpunkt dieser Basislinie mit der DSC-Kurve das obere Ende des Glasübergangsbereiches und das untere Ende des Schmelzbereiches (Schmelzbeginn) darstellt. Als Glastemperatur Tg wird wie üblich die Temperatur definiert, bei der die endotherme Wärmeflußstufe ihren halben Wert erreicht hat (vgl. EP-A1-106 999).

Die Kristallinität der Ethylencopolymerisate wurde entsprechend den Angaben in der EP-A1-106 999 ermittelt.

Erfindungsgemäß sollen in den Copolymerisaten alle Polymermoleküle, unabhängig vom Molekulargewicht, den gleichen Gehalt an Comonomerer (a) oder Comonomeren (a) und (b) besitzen.

Die Bestimmung der Comonomer-Verteilung in den Ethylencopolymerisaten in Abhängigkeit von der Molmasse erfolgte mittels Gelpermeations-Chromatographie (GPC), wobei sowohl ein Refraktometer als auch eine IR-Meßzelle verwenet wurde. Der IR-Detektor ist dabei selektiv auf die funktionellen Gruppen der Probe eingestellt; im Falle von Estern auf 5,75 bis 5,80 m im Falle von Carbonsäuren bei 5,85 bis 5,92 m. Die Abhängigkeit der Comonomerzusammensetzung von der Molmasse wird nach folgendem Verfahren bestimmt: Aus den Schreiberkurven der beiden Detektoren wird punktweise der Quotient aus den Höhen gebildet. Ist dabei die berechnete Quotientenkurve eine Parallele zur Abszisse, so kann man davon ausgehen, daß alle Polymermoleküle, unabhängig vom Molekulargewicht, den gleichen Gehalt an Comonomer besitzen. Die Arbeitsbedingungen bei der GPC-Analyse sind folgende: Als GPC-Säulen werden zwei Shodex-Mischgelsäulen (AT-80 M/S) verwendet. Die Ofentemperatur liegt bei 105°C. Als Lösungsmittel dient Tetrachlorethylen. Die Durchflußrate beträgt 0,6 ml pro Minute. Die Konzentration der Lösung liegt bei 0,2 Gew.% und das Injektionsvolumen beträgt 0,5 ml.

Als Konzentrationsdetektor wird ein Differentialrefraktometer der Fa. Knauer (Zellvolumen 20 ml) verwendet. Der maximale Druckaufbau im GPC liegt bei 10 bar.

Die Herstellung der Ethylen-(Meth)acrylsäurealkylester-Copolymerisate erfolgt nach herkömmlichen und üblichen Hochdruckpolymerisationsverfahren im Rührautoklavenreaktor [vgl. Ullmanns Encyclopädie der technischen Chemie, 4. Auflage, Band 19 (1980), Seiten 169 bis 175, Verlag Chemie GmbH, D-6940 Weinheim sowie die Literaturstellen US-A-4 074 040 oder US-A-4 217 431]. Die Copolymerisation des Ethylens mit den Estern der (Meth)acrylsäure, gegebenenfalls zusammen mit anderen mit Ethylen copolymerisierbaren Monomeren, erfolgt bei Drücken von 350 bis 5.000 bar, vorzugsweise 1500 bis 3.000 bar. Die Temperaturen im Polymerisationssystem liegen zwischen 50 und 450°C, vorzugsweise zwischen 150 und 350°C. Die Bedingungen im Polymerisationssystem lassen sich apparativ in Rührautoklavenreaktoren herstellen. Rührautoklaven sind Druckgefäße mit einem Längen-/Durchmesser-Verhältnis von 1 bis ca. 20, die zur intensiven Vermischung der Reaktionsteilnehmer mit einem Rührer versehen sind. Besonders geeignet für die Herstellung der erfindungsgemäßen Copolymerisate des Ethylens sind Rührautoklaven mit einem Länge-/Durchmesser-Verhältnis im Bereich von 1 bis 12.

Die Copolymerisation des Ethylens mit den Estern der (Meth)acrylsäure, gegebenenfalls mit anderen mit Ethylen copolymerisierbaren Monomeren, erfolgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. In Betracht kommen beispielsweise Peroxide und andere radikalbildende Verbindungen sowie Gemische von Peroxiden, die unterschiedliche Zerfallstemperaturen haben, und Hydroperoxide. Als Beispiele für Peroxide und Hydroperoxide seien genannt: tert.-Butylperpivalat, di-tert.-Butylperoxid, tert.-Butylhydroperoxid, tert.-Butylperbenzoat, Dilauroylperoxid und tert.-Butylperisononanat. Unter radikalischen Polymerisationsinitiatoren werden auch Verbindungen wie beispielsweise Azoiso-Buttersäuredinitril verstanden. Man kann auch Mischungen aus mehreren Peroxiden verwenden. Besonders geeignet sind Peroxide wie di-tert.-Butylperoxid, tert.-Butylperpivalat und tert.-Butylperisononanat.

Das Molekulargewicht des anfallenden Copolymerisats kann durch die üblichen Regler, z.B. Kohlenwasserstoffe wie Propan, Propen etc., Ketone wie Aceton, Methylethylketon etc. oder Aldehyde wie Propionaldehyd, auf den gewünschten Wert gebracht werden. Besonders geeignet ist hierbei Propionaldehyd.

Die Copolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden.

Nach dem erfindungsgemäßen Verfahren soll die Temperatur im gesamten Reaktionsraum möglichst konstant sein, die Temperaturdifferenz sollte auf keinen Fall mehr als 30°C betragen. Dies kann dadurch erreicht werden, daß man eine sehr intensive Vermischung gewährleistet und daß die Zugabe des Ethylengemisches in der Mitte und gegebenenfalls gleichzeitig an mindestens einer weiteren Stelle oder nur an mehreren Stellen des Rührautoklaven erfolgt.

Die Löslichkeit in Tetrachlorethylen wird folgendermaßen bestimmt: Ein Gramm Copolymerisat wird in ca. 50 ml siedendem Tetrachlorethylen gelöst und abfiltriert; man spült zweimal mit 50 ml siedendem Tetrachlorethylen nach. Die Filtration erfolgt über ein Sieb mit einer Waschweite von 36 m. Nach dem Trocknen bei 80°C unter Vakuum bei 1 bar wird die Sieboberfläche im Mikroskop betrachtet. Hierbei kann festgestellt werden, ob ein unlöslicher Rückstand vorhanden war oder sich das gesamte Produkt gelöst hatte.

Es ist ein Vorteil der erfindungsgemäßen Copolymerisate, daß sie nicht nur eine niedere Glastemperatur besitzen, sondern auch in Tetrachlorethylen vollständig löslich sind.

Die Erfindung wird durch das folgende Beispiel näher erläutert.

### Beispiel

Eine Mischung von 300 kg/h Ethylen, 22,5 kg/h n-Butylacrylat und 3 kg/h Acrylsäure mit einer Temperatur von 90°C wurde kontinuierlich durch einen bei einem Druck von 2300 bar gehaltenen 10 1-Rührautoklaven (Länge-/Durchmesserverhältnis 13:1) geleitet. Die Dosierung des Reaktionsgemisches erfolgte dabei in der Autoklavenmitte. Durch die kontinuierliche Zugabe von 35 g/h tert.-Butylperpivalat (gelöst in Isododecan) wurde die maximale Temperatur im Autoklaven bei 220°C gehalten, wobei die Temperaturdifferenzen im Reaktor bei 15°C lagen. Das nach Entspannung des Reaktionsgemisches in einer Menge von 50 kg/h anfallende Polymerisat entsprach einem Umsatz von 16,5 Gew.% (bezogen auf den Ethylen-Durchsatz). Es enthielt auf 100 Mol Ethylen 12,1 Mol n-Butylacrylat und 3,3 Mol Acrylsäure einpolymerisiert und wies einen Schmelzindex von 9 g/10' (gemessen nach DIN 53 735 bei 190°C und 2,16 kg) auf. Der kristalline Anteil betrug 10 % und die Glastemperatur lag bei -42°C. Das Produkt war vollständig in Tetrachlorethylen löslich. Der Quotient aus der Höhe des Refraktometersignals und des IR-Signals ist unabhängig vom Molekulargewicht.

### Vergleichsversuch

Als Vergleichsversuch diente das Beispiel 1 aus der EP-A-1-106 999. Dieses Produkt war Tetrachlorethylen nicht vollständig löslich; nachem Absieben wurde ein deutlicher Rückstand auf dem Filter festgestellt. Der Quotient aus der Höhe des Refraktometersignals und des IR-Signals ist im hochmolekularen Bereich um den Faktor 2 größer als im niedermolekularen Bereich.

## Patentansprüche

1. Verfahren zur Herstellung von Ethylencopolymerisaten durch Copolymerisation des Ethylens mit (a) 7,4 bis 14,8 Mol je Mol Ethylen an Estern der (Meth)acrylsäure mit C₁-C₈-Alkoholen und (b) 0 bis 9,5 Mol je Mol Ethylen an anderen mit Ethylen copolymerisierbaren Comonomeren in einem Rührautoklaven als Polymerisationssystem bei Drücken von 500 bis 5.000 bar und Temperaturen von 50 bis 450°C in Gegenwart von radikalisch zerfallenden Polymerisationsinitiatoren, indem man dem Polymerisationssystem in dessen Mitte und gegebenenfalls gleichzeitig an mindestens einer weiteren Zuführstelle oder an mehreren Stellen des Rührautoklaven ein Gemisch aus Ethylen, Initiator, Regler, Comonomer (a) und gegebenenfalls Comonomer (b) zuführt, dadurch gekennzeichnet, daß die maximale Temperaturdifferenz innerhalb des Polymerisationssystems 30°C nicht überschreitet.

2. Verfahren nach Anspruch 1, dadurch gekennzeichnet, daß die maximale Temperaturdifferenz innerhalb des Polymerisationssystems 20°C nicht überschreitet.

3. Ethylencopolymerisate, die auf 100 Mol Ethylen
(a) 7,4 bis 14,8 Mol eines Esters der (Meth)acrylsäure mit C₁-C₈-Alkoholen und
(b) 0 bis 9,5 Mol eines anderen mit Ethylen copolymerisierbaren Comonomeren
einpolymerisiert enthalten und einen kristallinen Anteil von 7 bis 20 % und eine Glasübergangstemperatur unterhalb von -30°C aufweisen, und deren Copolymerisatmoleküle unabhängig vom Molekulargewicht den gleichen Gehalt an Comonomeren (a) oder an Comonomeren (a) und (b) besitzen, erhältlich durch ein Verfahren gemäß Anspruch 1 oder 2.

## Claims

1. A process for the preparation of an ethylene copolymer by copolymerizing ethylene with (a) from 7.4 to 14.8 mol, per mol of ethylene of esters of (meth)acrylic acid with C₁-C₈-alcohols and (b) from 0 to 9.5 mol, per mol of ethylene, of other comonomers copolymerizable with ethylene, in a stirred autoclave as the polymerization system at from 500 to 5,000 bar and from 50 to 450°C in the presence of a free radical polymerization initiator, by feeding a mixture of ethylene, initiator, regulator, comonomer (a) and, if required, comonomer (b) to the polymerization system at its middle and, if required, simultaneously at one or more further feed points or at a plurality of points of the stirred autoclave, wherein the maximum temperature difference inside the polymerization system does not exceed 30°C.

2. A process as claimed in claim 1, wherein the maximum temperature difference inside the polymerization system does not exceed 20°C.

3. An ethylene copolymer which contains, per 100 mol of ethylene,
(a) from 7.4 to 14.8 mol of an ester of (meth)acrylic acid with C₁-C₈-alcohols and
(b) from 0 to 9.5 mol of another comonomer copolymerizable with ethylene
as polymerized units has a crystallinity of from 7 to 20% and a glass transition temperature below -30°C and whose copolymer molecules have the same content of comonomers (a) or of comonomers (a) and (b) regardless of molecular weight, obtainable by a process as claimed in claim 1 or

## Revendications

1. Procédé de préparation de copolymères d'éthylène par copolymérisation de l'éthylène avec (a) 7,4 à 14,8 moles, pour 100 moles d'éthylène, d'esters d'acide (méth)acrylique et d'alcools en C₁-C₈ et (b) 0 à 9,5 moles, pour 100 moles d'éthylène, d'autres comonomères copolymérisables avec l'éthylène, dans un autoclave à agitation en tant que système de polymérisation, sous des pressions de 500 à 5000 bar et à des températures de 50 à 450°C, en présence d'amorceurs radicalaires de polymérisation, procédé dans lequel on envoie dans le système de polymérisation, au milieu de celui-ci et, le cas échéant, simultanément en au moins un autre point d'alimentation ou en plusieurs points de l'autoclave à agitation, un mélange d'éthylène, d'amorceur, de régulateur, de comonomère (a) et éventuellement de comonomère (b), caractérisé en ce que la différence maximale de température a l'intérieur du système de polymérisation ne dépasse pas 30°C.

2. Procédé selon la revendication 1, caractérisé en ce que la différence maximale de température à l'intérieur du système de polymérisation ne dépasse pas 20°C.

3. Copolymères d'éthylène qui contiennent en liaison polymère, pour 100 moles d'éthylène,
a) de 7,4 à 14,8 moles d'un ester d'acide (méth)acrylique et d'alcools en C₁-C₈ et
b) de 0 à 9,5 moles d'un autre comonomère copolymérisable avec l'éthylène
et qui présentent une part cristalline de 7 à 20% et une température de transition vitreuse inférieure à -30°C, et dont les molécules de copolymère ont, indépendamment du poids moléculaire, la même teneur en comonomère (a) ou en comonomères (a) et (b), obtenus par un procédé selon la revendication 1 ou 2.
